# EUROPEAN PATENT APPLICATION

(11) **EP 4 261 665 A1**
(43) Date of publication of application: **18.10.2023**
(21) Application number: 21913871.6
(22) Date of filing: 13.12.2021
(51) Int. Cl.: G06F 3/048

(54) **APPLICATION PROGRAM LOGIN METHOD AND SYSTEM**

(30) Priority: 30.12.2020 CN 202011615817
(71) Applicant: Huawei Technologies Co., Ltd., Shenzhen, Guangdong 518129 (CN)
(72) Inventor: ZHU, Ying, Shenzhen, Guangdong 518129 (CN); LI, Yuanfeng, Shenzhen, Guangdong 518129 (CN); LIN, Lixin, Shenzhen, Guangdong 518129 (CN)
(74) Representative: Huawei European IPR
(86) International application number: PCT/CN2021/137538
(87) International publication number: WO 2022/143130

(57) **Abstract**

This application provides an application login method and system, and relates to the field of communication technologies. The system includes a first electronic device and a second electronic device. A cellular communication function of the second electronic device is available. The first electronic device is configured to: display a login interface after an application to be logged in to is started, where the login interface includes a second control, the second control is used to provide a first login manner, and the first login manner is obtaining login information from an authentication server by using the cellular communication function of the second electronic device, to log in to the application based on the login information; and log in to the application in the first login manner after an operation performed by a user on the second control is detected. According to the application login system in embodiments of this application, after detecting the operation performed by the user on the second control, the first electronic device may log in to the application by using the cellular communication function of the second electronic device. This is easy for the user to operate and provides good user experience.

## Description

This application claims priority to Chinese Patent Application No. 202011615817.1, filed with the China National Intellectual Property Administration on December 30, 2020 and entitled "APPLICATION LOGIN METHOD AND SYSTEM", which is incorporated herein by reference in its entirety.

### TECHNICAL FIELD

This application relates to the field of communication technologies, and in particular, to an application login method and system.

### BACKGROUND

Currently, when an electronic device with a large screen (a large-screen device for short, including a smart television, a notebook computer, and the like) logs in to an application, the following login manners are usually used: (1) account and password login, (2) SMS verification code login, (3) QR code login, and the like.

In the manner (1), a user needs to enter an application account and a password on the large-screen device. In the manner (2), the user needs to enter a mobile phone number on the large-screen device and then enter a verification code received by a mobile phone. In the manner (3), the user usually needs to install and log in to a mobile phone-version application on the mobile phone, and scan a QR code on the large-screen device by using the mobile phone-version application, to control the large-screen device to log in to a computer-version application. It can be learned that for the large-screen device, regardless of which manner is used to log in to the application, the user needs to perform a complex operation. Consequently, user experience is poor.

### SUMMARY

This application provides an application login method and system, to resolve problems, to some extent, that a user operation is complex and user experience is poor when a large-screen device logs in to an application in the conventional technology.

To achieve the foregoing objective, this application uses the following technical solutions.

According to a first aspect, this application provides an application login system, including a first electronic device and a second electronic device. A cellular communication function of the second electronic device is available. The first electronic device is configured to: display a login interface after an application to be logged in to is started, where the login interface includes a second control, the second control is used to provide a first login manner, and the first login manner is obtaining login information from an authentication server by using the cellular communication function of the second electronic device, to log in to the application based on the login information; and log in to the application in the first login manner after an operation performed by a user on the second control is detected.

In this embodiment, the first electronic device is any one of first-type electronic devices, for example, a smart television. The second electronic device is any one of second-type electronic devices, for example, a mobile phone. A cellular communication function of the first-type electronic device is unavailable, and a cellular communication function of the second-type electronic device is unavailable.

According to the application login system provided in this embodiment of this application, after detecting the operation performed by the user on the second control (for example, a "One-tap login" icon), the first electronic device may obtain the login information from the authentication server of an operator by using the second electronic device whose cellular communication function is available, and log in to a corresponding application based on the login information. When logging in to the application by using the system, the user does not need to perform a complex character input operation, and does not need to install and log in to a mobile phone-version application on the second electronic device, so that user experience is good.

In some embodiments, a cellular communication function of the first electronic device is unavailable.

In some embodiments, when the first electronic device already obtains authorization from the second electronic device, identification information of the second electronic device is further displayed on the login interface. The identification information may be a mobile phone number mask, a device name, or the like. In this embodiment, after detecting the operation performed by the user on the second control, the first electronic device may directly log in to the application. The user needs to perform only one operation to control the first electronic device to log in to the application, so that user experience is good.

In some embodiments, when the first electronic device does not obtain authorization from the second electronic device, the first electronic device is further configured to: obtain the authorization from the second electronic device after the operation performed by the user on the second control is detected, and log in to the application in the first login manner.

In this embodiment, in a scenario in which the first electronic device does not log in to the application by using the second electronic device, before logging in to the application in the first login manner, the first electronic device needs to determine the second electronic device and obtain the authorization from the second electronic device.

In some embodiments, in a process of obtaining the authorization from the second electronic device, the first electronic device is further configured to: display a device selection interface, where the device selection interface includes at least one available host, and the available host is an electronic device that can cooperate with the first electronic device to log in to the application in the first login manner; and send, by the first electronic device, an authorization request to the second electronic device in response to an operation of selecting the second electronic device from the at least one available host by the user, where the authorization request requests the second electronic device to cooperate with the first electronic device to log in to the application in the first login manner.

The second electronic device is configured to: display an authorization request interface after the authorization request is received, where the authorization request interface includes a sixth control and a seventh control, the sixth control is used to reject the authorization request, and the seventh control is used to accept the authorization request; and send an authorization notification to the first electronic device in response to an operation performed by the user on the seventh control, where the authorization notification indicates that the second electronic device already accepts the authorization request.

According to the system provided in this embodiment, the user needs to perform only two operations to obtain the authorization from the second electronic device. The first operation is to select the second electronic device on the device selection interface, and the second operation is to select the seventh control on the authorization request interface of the second electronic device. An authorization process is convenient and quick.

In some embodiments, the first electronic device is further configured to: update the login interface after the authorization notification is received, where an updated login interface displays identification information of the second electronic device; and log, by the first electronic device, in to the application in the first login manner in response to an operation performed by the user on the second control on the updated login interface.

In this embodiment, when the first electronic device logs in to the application by using the second electronic device for the first time, after the first electronic device updates the login interface, the user needs to perform only one operation (that is, select the second control) to log in to the application, so that the user operation is simple.

In some embodiments, the first electronic device is further configured to: broadcast a device information obtaining request to a router in a local area network in which the first electronic device is located; receive device information sent by the at least one available host in the local area network; and display the device selection interface based on the device information sent by the at least one available host.

According to the system provided in this embodiment, the first electronic device may select, from the local area network in which the first electronic device is located, an available electronic device as the second electronic device.

In some embodiments, the first electronic device is further configured to: send a device information obtaining request to a cloud server corresponding to a device account logged in to by the first electronic device; receive device information that is of the at least one available host and that is sent by the cloud server; and display the device selection interface based on the device information sent by the at least one available host.

In this embodiment, communication between the first electronic device and the second electronic device is not limited by a same local area network. The first electronic device can remotely log in to the application by using the second electronic device in the first login manner, provided that the first electronic device and the second electronic device log in to a same device account.

In some embodiments, the first electronic device is configured to: display an application home interface, where the application home interface includes a first control, and the first control is used to control the first electronic device to display the login interface; and display the login interface in response to an operation performed by the user on the first control.

In some embodiments, the login interface further includes at least one of an SMS verification code login control, a QR code login control, and an account and password login control. In this embodiment, after the first electronic device fails to log in to the application based on the first login manner, the first electronic device may alternatively select, according to a user instruction, another login manner to log in to the application.

In some embodiments, the first electronic device is further configured to send a first login request to the second electronic device. The first login request requests to obtain the login information. The second electronic device is further configured to: send the first login request to the authentication server; receive the login information sent by the authentication server; and send the login information to the first electronic device. The first electronic device is further configured to log in to the application based on the login information.

In some embodiments, the first electronic device is further configured to: send a second login request to an application server corresponding to the application, where the second login request includes the login information, and the second login request is used by the application server to log in to the application based on the login information; and receive a login result notification sent by the application server. The login result notification includes a login success notification and a login failure notification.

In some embodiments, when the first electronic device and the second electronic device are electronic devices in a same local area network, the first electronic device and the second electronic device communicate with each other by using a router in the local area network.

In some embodiments, when the first electronic device and the second electronic device log in to a same device account, the first electronic device and the first electronic device communicate with each other by using a cloud server corresponding to the device account, or by using a peer-to-peer connection.

According to a second aspect, this application provides an application login method. The method includes: A first electronic device displays a login interface after an application to be logged in to is started. The login interface includes a second control, the second control is used to provide a first login manner, and the first login manner is obtaining login information from an authentication server by using a cellular communication function of the second electronic device, to log in to the application based on the login information. The first electronic device logs in to the application in the first login manner after an operation performed by a user on the second control is detected.

In some embodiments, a cellular communication function of the first electronic device is unavailable.

In some embodiments, when the first electronic device already obtains authorization from the second electronic device, identification information of the second electronic device is further displayed on the login interface.

In some embodiments, that the first electronic device logs in to the application in the first login manner after an operation performed by a user on the second control is detected includes: The first electronic device obtains authorization from the second electronic device after the operation performed by the user on the second control is detected, and logs in to the application in the first login manner.

In some embodiments, that the first electronic device obtains authorization from the second electronic device includes: The first electronic device displays a device selection interface. The device selection interface includes at least one available host, and the available host is an electronic device that can cooperate with the first electronic device to log in to the application in the first login manner. The first electronic device sends an authorization request to the second electronic device in response to an operation of selecting the second electronic device from the at least one available host by the user. The authorization request requests the second electronic device to cooperate with the first electronic device to log in to the application in the first login manner. The second electronic device displays an authorization request interface after the authorization request is received. The authorization request interface includes a sixth control and a seventh control, the sixth control is used to reject the authorization request, and the seventh control is used to accept the authorization request. The second electronic device sends an authorization notification to the first electronic device in response to an operation performed by the user on the seventh control. The authorization notification indicates that the second electronic device already accepts the authorization request.

In some embodiments, the method further includes: The first electronic device updates the login interface after the authorization notification is received. An updated login interface displays identification information of the second electronic device. The first electronic device logs in to the application in the first login manner in response to an operation performed by the user on the second control on the updated login interface.

In some embodiments, that the first electronic device displays a device selection interface includes: The first electronic device broadcasts a device information obtaining request to a router in a local area network in which the first electronic device is located. The first electronic device receives device information sent by the at least one available host in the local area network. The first electronic device displays the device selection interface based on the device information sent by the at least one available host.

In some embodiments, that the first electronic device displays a device selection interface includes: The first electronic device sends a device information obtaining request to a cloud server corresponding to a device account logged in to by the first electronic device; and displays the device selection interface based on device information sent by the at least one available host.

In some embodiments, that a first electronic device displays a login interface includes: The first electronic device displays an application home interface. The application home interface includes a first control, and the first control is used to control the first electronic device to display the login interface. The first electronic device displays the login interface in response to an operation performed by the user on the first control.

In some embodiments, the login interface further includes at least one of an SMS verification code login control, a QR code login control, and an account and password login control.

In some embodiments, the logging in to the application in the first login manner includes: The first electronic device sends a first login request to the second electronic device. The first login request requests to obtain the login information. The second electronic device sends the first login request to the authentication server. The second electronic device receives the login information sent by the authentication server. The second electronic device sends the login information to the first electronic device. The first electronic device logs in to the application based on the login information.

In some embodiments, that the first electronic device logs in to the application based on the login information includes: The first electronic device sends a second login request to an application server corresponding to the application. The second login request includes the login information, and the second login request is used by the application server to log in to the application based on the login information. The first electronic device receives a login result notification sent by the application server.

In some embodiments, when the first electronic device and the second electronic device are electronic devices in a same local area network, the first electronic device and the second electronic device communicate with each other by using a router in the local area network.

In some embodiments, when the first electronic device and the second electronic device log in to a same device account, the first electronic device and the first electronic device communicate with each other by using a cloud server corresponding to the device account, or by using a peer-to-peer connection.

It may be understood that, for beneficial effects of the second aspect, refer to the related descriptions in the first aspect. Details are not described herein again.

### BRIEF DESCRIPTION OF DRAWINGS

FIG. 1 is a schematic diagram of a structure of a communication system according to an embodiment of this application;
FIG. 2 is a schematic diagram of a first interface of a smart television according to an embodiment of this application;
FIG. 3 is a schematic diagram of a second interface of a smart television according to an embodiment of this application;
FIG. 4 is a schematic diagram of a third interface of a smart television according to an embodiment of this application;
FIG. 5 is a schematic diagram of an authorization request interface of a target host according to an embodiment of this application;
FIG. 6 is a schematic diagram of an authorized login interface of a smart television according to an embodiment of this application;
FIG. 7 is a schematic diagram of a first interface of a smart television according to another embodiment of this application;
FIG. 8 is a schematic diagram of a first interface of a smart television according to still another embodiment of this application;
FIG. 9 is a schematic diagram of a first interface of a smart television according to yet another embodiment of this application;
FIG. 10 is a schematic diagram of a second interface of a smart television according to another embodiment of this application;
FIG. 11 is a schematic diagram of a structure of a communication system according to another embodiment of this application;
FIG. 12 is a schematic diagram of an application login method according to an embodiment of this application;
FIG. 13 is a schematic diagram of an application login method according to another embodiment of this application;
FIG. 14 is a schematic diagram of a second interface of a smart television according to still another embodiment of this application;
FIG. 15 is a schematic diagram of an application login method according to still another embodiment of this application;
FIG. 16 is a schematic diagram of an application login method according to yet another embodiment of this application;
FIG. 17A and FIG. 17B are a schematic diagram of an application login method according to still yet another embodiment of this application; and
FIG. 18 is a schematic diagram of a structure of an electronic device according to an embodiment of this application.

### DESCRIPTION OF EMBODIMENTS

With development of computer technologies, an electronic device can provide a corresponding service for a user by running various applications. These applications include but are not limited to a video playback application, an audio playback application, a shopping application, a game application, an artificial intelligence (artificial intelligence, AI) fitness application, and the like. In addition, these applications may be applications downloaded and installed locally by the electronic device, or may be applications invoked and run by the electronic device from a web page. This is not limited in this embodiment.

In this embodiment, the electronic devices may be classified into a first-type electronic device and a second-type electronic device based on whether a cellular communication function of the electronic device is available. A cellular communication function of the first-type electronic device is unavailable, and the first-type electronic device is, for example, a large-screen device like a smart television, a tablet computer, a notebook computer, a desktop computer, a smart screen, an ultra-mobile personal computer (ultra-mobile personal computer, UMPC), a netbook, or a personal digital assistant (personal digital assistant, PDA), and a mobile phone, a smartwatch, or the like on which no subscriber identity module (subscriber identity module, SIM) card or e-SIM card (namely, an electronic SIM card) is installed. A cellular communication function of the second-type electronic device is available, and the second-type electronic device is, for example, a mobile phone, a smartwatch, or the like on which a SIM card or an e-SIM card is installed.

When the cellular communication function of the electronic device is available, the electronic device may communicate with an operator device by using a technology like circuit switched (Circuit Switched, CS), voice over long-term evolution (Voice over Long-Term Evolution, VoLTE), voice over new radio (Voice over New Radio, VoNR), or voice over wireless fidelity (wireless fidelity, Wi-Fi) (Voice over Wi-Fi, VoWi-Fi).

Usually, the electronic device logs in to the application based on an application account. The application account may be a unique user identifier like a mobile phone number, an email address, an identity card number, or a user name. After logging in to the application, the electronic device may store user data in a corresponding application account in an application server. After logging in to the application by using any electronic device, the user may obtain the user data in the corresponding account from the application server.

Currently, when the first-type electronic device (for example, a smart television) logs in to the application, the following login manners are usually used: (1) account and password login, (2) SMS verification code login, (3) QR code login, and the like.

In the manner (1), the electronic device can log in to the application only based on an application account and a password that are entered by the user. However, the application account and the password usually include a large quantity of characters, and an input process of the user is time-consuming and an operation of the user is inconvenient. Consequently, login efficiency is low and user experience is poor.

In the manner (2), the electronic device can log in to the application only after obtaining a mobile phone number entered by the user and a verification code received by a mobile phone. The mobile phone number and the verification code usually also have a large quantity of characters, and there are problems that the input process of the user is time-consuming and the operation of the user is inconvenient. Consequently, login efficiency is low and user experience is poor.

In addition, when the application is logged in to by using an SMS verification code, there is a security problem of global system for mobile communications (Global System for Mobile Communication, GSM). The SMS verification code is prone to be intercepted, and information and property security of the user cannot be ensured.

In the manner (3), the user usually needs to install and log in to a mobile phone-version application on another electronic device (for example, a mobile phone), and then scan a QR code on a login interface of a large-screen device by using the mobile phone-version application, to control the large-screen device to log in to a computer-version application. Consequently, user experience is poor.

It can be learned that for the first-type electronic device, regardless of which manner is used to log in to the application, the user needs to perform a complex operation. Consequently, user experience is poor. Therefore, an embodiment of this application provides an application login method, and relates to a process in which the first-type electronic device logs in to the application by using a cellular communication function of the second-type electronic device. The method can improve efficiency of logging in to the application by the first-type electronic device, and improve user experience.

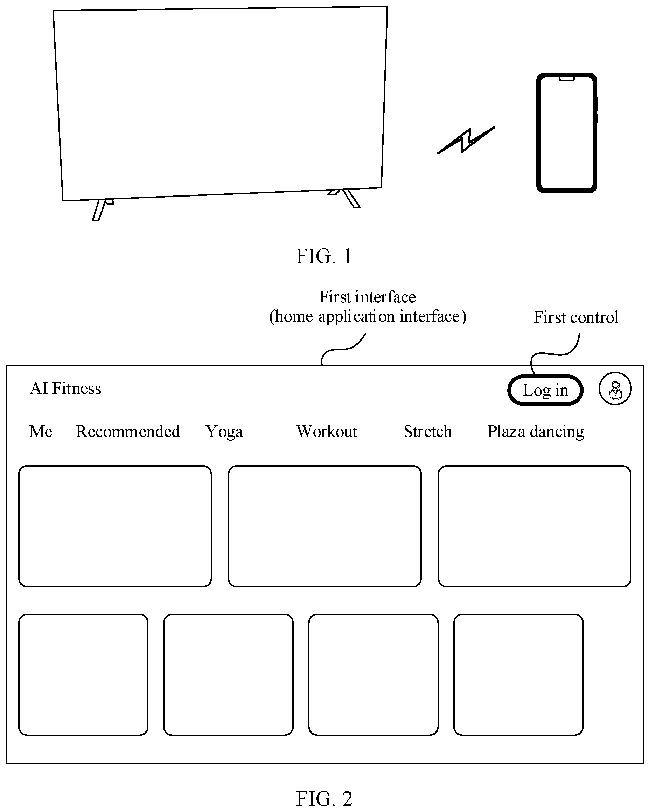

With reference to FIG. 1, the following describes the technical solutions provided in embodiments of this application by using an example in which the first-type electronic device is a smart television and the second-type electronic device is a mobile phone, and a process in which the smart television logs in to a target application by using a cellular communication function of the mobile phone.

For example, the target application is AI Fitness. After the smart television starts the AI Fitness, when the AI Fitness is in a non-logged-in state, the smart television usually displays a first interface (which is also referred to as an application home interface, namely, an interface first displayed after the application is started), and the first interface includes a first control. The first control is used to control the smart television to display a second interface. For example, the first interface may be an application home interface shown in FIG. 2. The first control may be a "Log in" icon shown in FIG. 2, or certainly may be an icon in another form, for example, a "Touch to log in" icon, a "Log in/Register" icon, or a "Log in now" icon.

In response to an operation performed by the user on the first control in the first interface, the smart television may display the second interface (which is also referred to as a login interface). In a scenario in which the smart television does not log in to the application by using a target host (namely, the second-type electronic device selected by the user), the second interface includes at least a second control, and the second control is used to provide a first login manner, that is, a manner of logging in to the application by using the cellular communication function of the second-type electronic device provided in this embodiment of this application. Optionally, the second interface may further include another control, for example, at least one of a third control, a fourth control, and a fifth control. The third control, the fourth control, and the fifth control are respectively used to provide other different login manners.

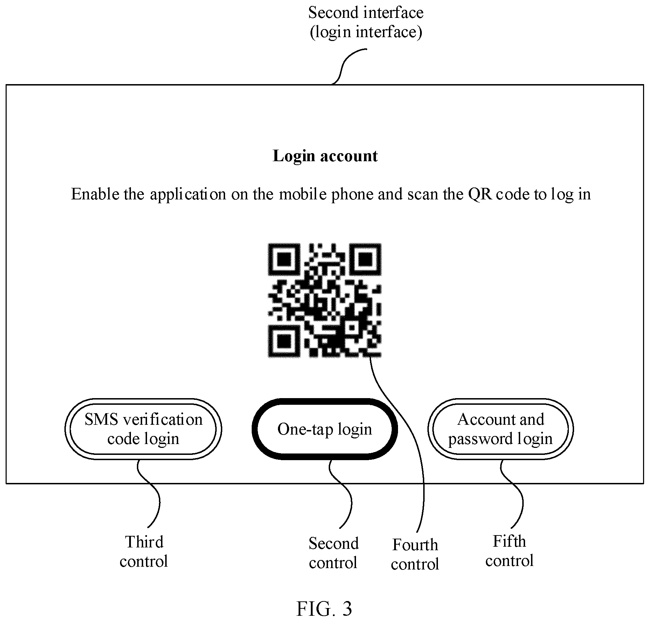

For example, after detecting that the user selects the "Log in" icon on the first interface by using a remote control, the smart television may display, for example, the second interface shown in FIG. 3. The second control to the fifth control included in the second interface are respectively a "One-tap login" icon, an "SMS verification code login" icon, a QR code, and an "Account and password login" icon.

It should be noted that, in this embodiment, an operation performed by the user on a control includes selecting the control by using the remote control, and clicking the control by using a mouse, or tapping, double-tapping, touching and holding, or pressing the control by using a touch operation, or selecting the control by using voice control, and the like. A specific manner of the operation is not limited in this embodiment.

In response to an operation performed by the user on the second control, the smart television displays a third interface (which is also referred to as a device selection interface). The third interface includes device information of an available host of the smart television. The available host is the second-type electronic device that can cooperate with the smart television to log in to the application. The device information displayed on the third interface may be a device name, a device model, or the like.

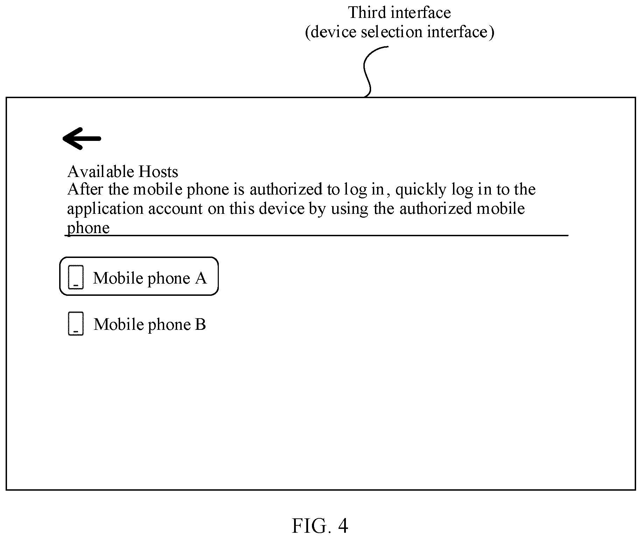

For example, after detecting that the user selects the "One-tap login" icon by using the remote control, the smart television may display, for example, the third interface shown in FIG. 4. Device names, namely, "Mobile phone A" and "Mobile phone B", are displayed on the third interface. Alternatively, the third interface may display a device model of the available host, for example, HUAWEI P40, Mate 30, or Nova 7. The user may select, based on a requirement, any available host on the third interface as the target host, to cooperate with the smart television to log in to the application.

In response to an operation of selecting the target host by the user, the target host displays an authorization request interface. The authorization request interface includes request description information, a sixth control, and a seventh control. The request description information is used to describe an event that the smart television requests the target host to execute, the sixth control is used to control rejection of an authorization request of the smart television, and the seventh control is used to control allowance for the authorization request of the smart television, and authorize and cooperate with the smart television to log in to the application. In response to an operation performed by the user on the seventh control, the target host authorizes and cooperates with the smart television to log in to the application.

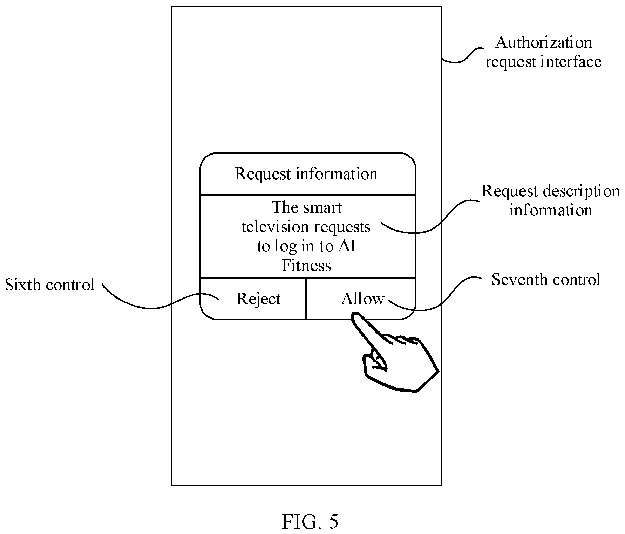

For example, in response to a case in which the user selects the mobile phone A as the target host by using the remote control in the third interface shown in FIG. 4, the mobile phone A displays the authorization request interface shown in FIG. 5. In the authorization request interface, the request description information is "The smart television requests to log in to AI Fitness", the sixth control is a "Reject" icon, and the seventh control is an "Allow" icon. After detecting that the user operates the "Allow" icon, the mobile phone A authorizes and cooperates with the smart television to log in to AI Fitness.

In a scenario in which the smart television logs in to the application by using the target host for the first time, after obtaining authorization from the target host, the smart television may display an authorized login interface, or may not display an authorized login interface.

In some embodiments, when the smart television displays the authorized login interface, the target host may send a mobile phone number mask of the target host to the smart television, so that the smart television displays the authorized login interface. The authorized login interface may highlight the second control on the basis of the original second interface, and display the mobile phone number mask of the target host. After the smart television displays the authorized login interface, it indicates that authorization from the target host corresponding to the mobile phone number mask displayed on the authorized login interface is obtained, and the smart television may log in to the target application by using a cellular communication function of the target host.

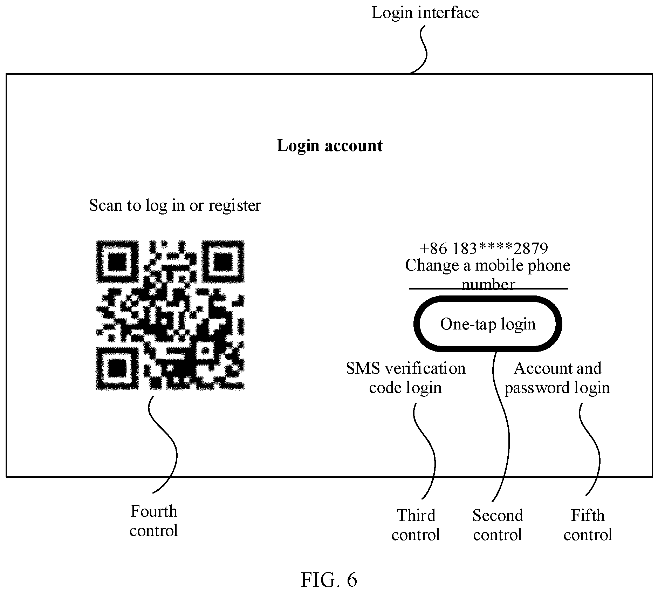

For example, the updated second interface may be shown in FIG. 6. The second control, namely, the "One-tap login" icon, is highlighted, and a mobile phone number mask 183^{∗∗∗∗}2879 of the target host is displayed. The mobile phone number mask is a mobile phone number encrypted by using a preset encryption algorithm. For example, a mask corresponding to a mobile phone number 183XXXX2879 is 183****2879.

In response to an operation performed by the user on the second control on the authorized login interface, the smart television may log in to the application. For example, as shown in FIG. 6, after detecting an operation performed by the user on the "One-tap login" icon, the smart television may log in to the application.

In some other embodiments, after authorizing and cooperating with the smart television to log in to the application, the target host may not notify the smart television to display the authorized login interface, but directly cooperate with the smart television to log in to the target application.

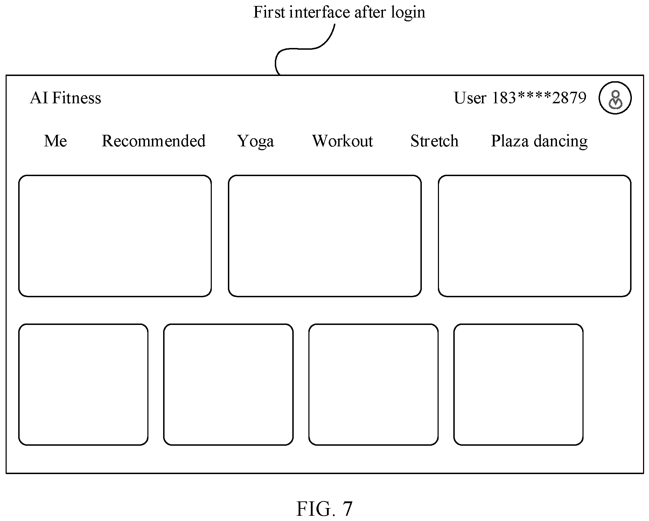

After the login succeeds, the smart television updates the first interface. An updated first interface does not display the first control, but displays user information, for example, a user name, an application account, and a user image. For example, for AI Fitness, after the smart television logs in to the AI Fitness by using the target host corresponding to 183XXXX2879, the smart television may display, for example, the first interface shown in FIG. 7, and the first interface displays user information, namely, "User 183^{∗∗∗∗}2879".

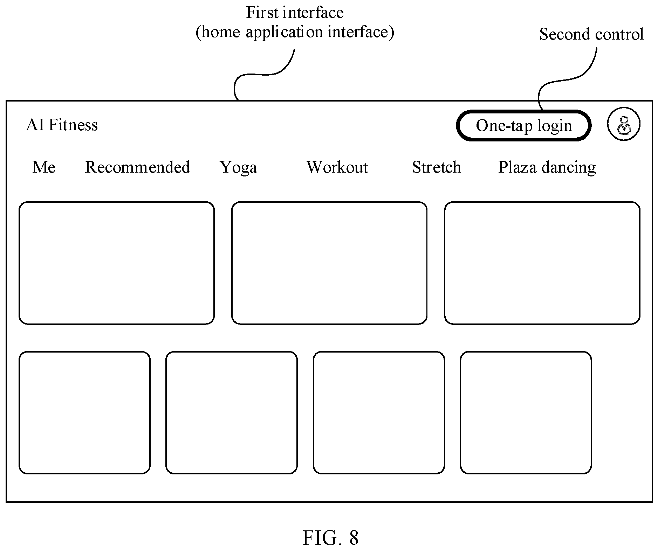

In addition, in some other embodiments, refer FIG. 8. After the target application is started, the smart television may also directly display the second control (for example, the "One-tap login" icon) on the first interface. In response to the operation performed by the user on the second control, the smart television may alternatively not display the second interface, but directly display the third interface (for example, as shown in FIG. 4).

According to the application login method provided in this embodiment, when the user logs in to an application by using a target host for the first time, after obtaining authorization from the target host through a simple operation, the user may log in to the application directly or by using a one-tap operation (for example, touching a "One-tap login" icon). This is easy to operate and provides good user experience.

After a login duration of the application in the smart television exceeds a preset duration (for example, two weeks), or after the application account is logged in to on another device, or after the user operates to log out of the application account, the application account logged in to on the smart television becomes invalid. Then, the smart television needs to log in to the application again.

In a scenario in which the smart television logs in to the target application by using a cellular communication function of a target host (for example, the mobile phone A) not for the first time, the smart television already obtains authorization from the mobile phone A, and a mobile phone number mask of the mobile phone A is stored locally. Therefore, the smart television can directly log in to the application by using the mobile phone A without obtaining the authorization from the mobile phone A again. Details are as follows.

In a possible implementation, after starting the target application, the smart television first displays, for example, the first interface shown in FIG. 2. In response to the operation performed by the user on the first control in the first interface, the smart television displays, for example, the authorized login interface shown in FIG. 6. In response to the operation performed by the user on the second control (for example, the "One-tap login" icon) on the authorized login interface, the smart television may log in to the target application.

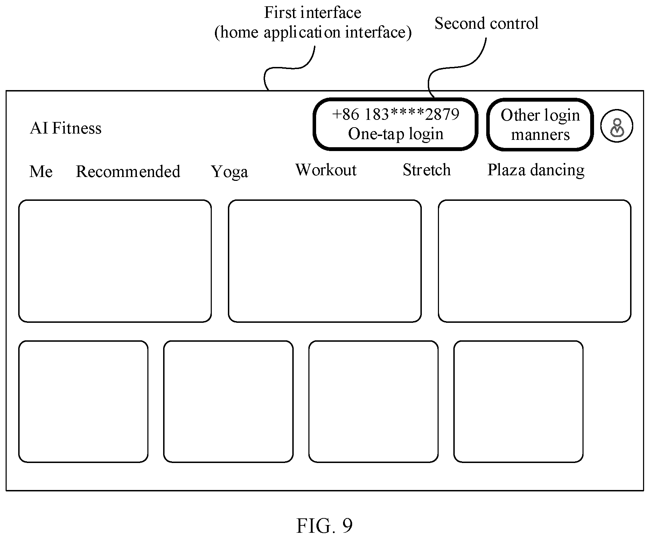

In another possible implementation, after starting the target application, the smart television may directly display, for example, the first interface shown in FIG. 9. The first interface includes the second control (for example, the "One-tap login" icon) and an "Other login manners" icon. The second control is used to log in to the application by using a mobile phone number (for example, 183XXXX2879) of the target host. After detecting the operation performed by the user on the second control, the smart television directly logs in to the application by using the mobile phone number of the target host. Specifically, in response to the operation performed by the user on the second control, the smart television may log in to the target application.

According to the application login method provided in this embodiment, when the user logs in to the application by using the target host not for the first time, the user may directly log in to the application by using the one-tap operation (for example, touching the "One-tap login" icon). This is easy to operate and provides good user experience.

In addition, in some embodiments, in a process in which the smart television logs in to the target program by using a target host not for the first time, another target host may also be used. For example, after detecting an operation performed by the user on a "Change a mobile phone number" icon in FIG. 6, the smart television may search for and determine a new target host again, obtain authorization from the new target host, and log in to the application by using the new target host. For a specific process, refer to the foregoing description. Details are not described herein again in this embodiment.

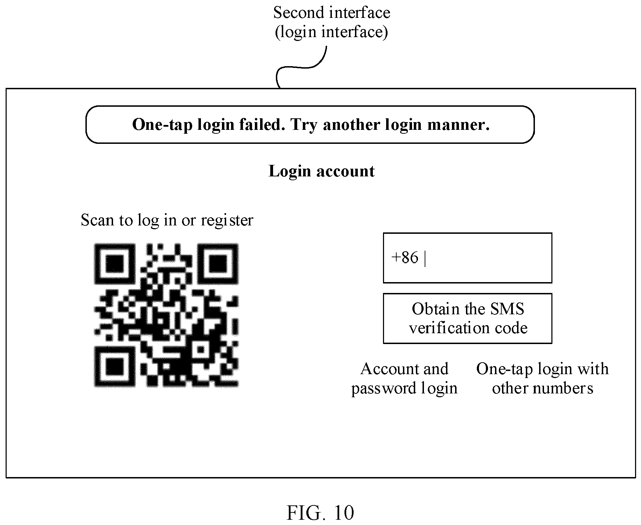

In some other embodiments, in a process in which the smart television logs in to the application by using the target host, the login may fail due to an authorization failure, a cellular network exception of the mobile phone, or the like. After detecting that the login fails, the smart television may update the second interface. An updated second interface highlights another login manner other than the first login manner, and displays login failure prompt information. For example, refer to FIG. 10. The login failure prompt information displayed on the updated second interface may be: "One-tap login failed. Try another login manner.", and an SMS verification code login manner is highlighted.

In conclusion, compared with existing login manners such as the SMS verification code login and the account and password login, the application login method provided in this embodiment is easy to operate, has a high login speed, and provides good user experience. In addition, compared with the existing login by scanning a QR code, the user does not need to install and log in to a mobile phone-version target application on the target host. This also provides good user experience.

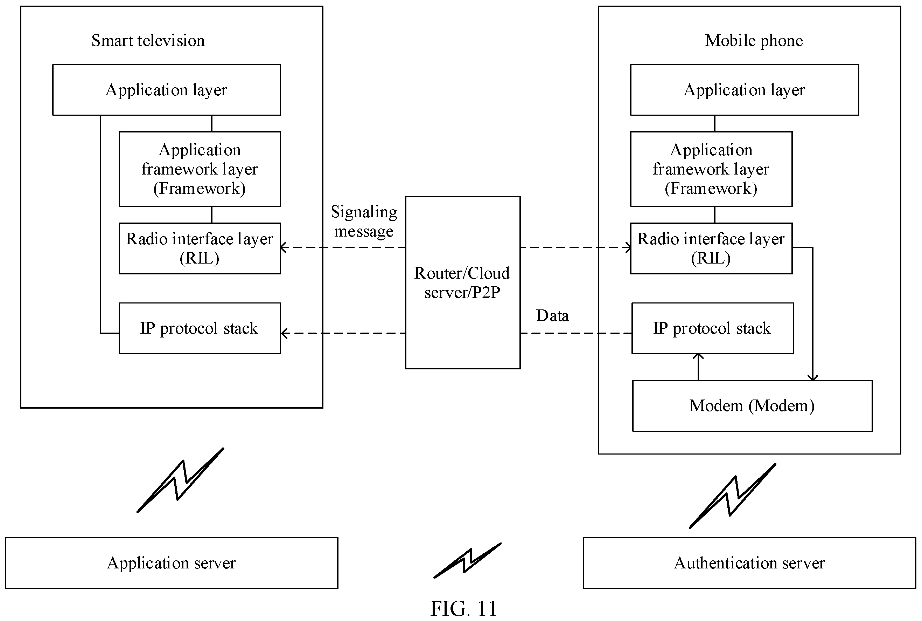

FIG. 11 is a schematic diagram of a structure of a communication system according to an embodiment of this application. As shown in FIG. 11, the communication system includes a smart television, a mobile phone, an application server, and an authentication server.

The smart television is an electronic device that is to log in to a target application, the mobile phone is a target host selected by a user, the application server provides the target application, and the authentication server is a server of a cellular communication network operator (operator for short). The smart television and the mobile phone may communicate with each other by using a router in a local area network, or communicate with each other by using a cloud server, or communicate with each other by establishing a peer-to-peer (peer-to-peer, P2P) connection by using network address translators (Network Address Translators, NAT). The mobile phone communicates with the authentication server through a cellular network. The smart television can communicate with the application server through the local area network. The application server can communicate with the authentication server through the local area network.

An application layer, an application framework layer (framework, FWK), a radio interface layer (radio interface layer, RIL), and an internet protocol (internet protocol, IP) protocol stack are disposed in both the smart television and the mobile phone. In addition, a modem (Modem) is disposed in the mobile phone.

When the smart television and the mobile phone communicate with each other by using the router or the P2P connection, after obtaining an IP address of each other, the smart television and the mobile phone may establish, based on the router or a P2P technology, a first Socket connection between the RIL of the smart television and the RIL of the mobile phone, and establish a second Socket connection between the IP protocol stack of the smart television and the IP protocol stack of the mobile phone. The first Socket connection is used to transmit a signaling message (including a request message and a response message), for example, an authorization request, an authorization notification, a rejection notification, a first login request, a second login request, and a login success notification in the following. The second Socket connection is used to transmit data information, for example, a mobile phone number mask and login information in the following.

When the smart television and the mobile phone communicate with each other by using the cloud server, the mobile phone maintains a heartbeat connection with the cloud server, and the smart television maintains a heartbeat connection with the cloud server. The cloud server, as an information forwarding device, forwards a message sent by the smart television to the mobile phone, and forwards a message sent by the mobile phone to the smart television. When the smart television and the mobile phone communicate with each other by using the cloud server, the signaling message is transmitted between the RIL of the smart television and the RIL of the mobile phone, and a data message is transmitted between the IP protocol stack of the smart television and the IP protocol stack of the mobile phone.

The following specifically describes, based on an application login system provided in this embodiment of this application, an application login method provided in embodiments of this application.

The application login method provided in this embodiment of this application includes the following two parts: (1) determining a target host and obtaining authorization; and (2) logging in to an application by using the target host. The content (1) may be performed only when a smart television logs in to the application by using the target host for the first time, and in a subsequent login process, the smart television does not need to obtain authorization from the target host again. The following separately describes the two parts of content with reference to the accompanying drawings.

### (1) Determining a target host and obtaining authorization

For the first time that the smart television logs in to a target application by using a target host, the smart television may actively search for and determine the target host, and obtain authorization from the target host. For example, the smart television may scan an available host in a local area network connected to the smart television, determine the target host from the available hosts, and obtain the authorization from the target host. Alternatively, the smart television may determine, by using a cloud server, available hosts that log in to a same device account as the smart television, select the target host from these available hosts, and obtain the authorization from the target host. In addition, the smart television may determine the target host based on a mobile phone number entered by a user, and obtain the authorization from the target host.

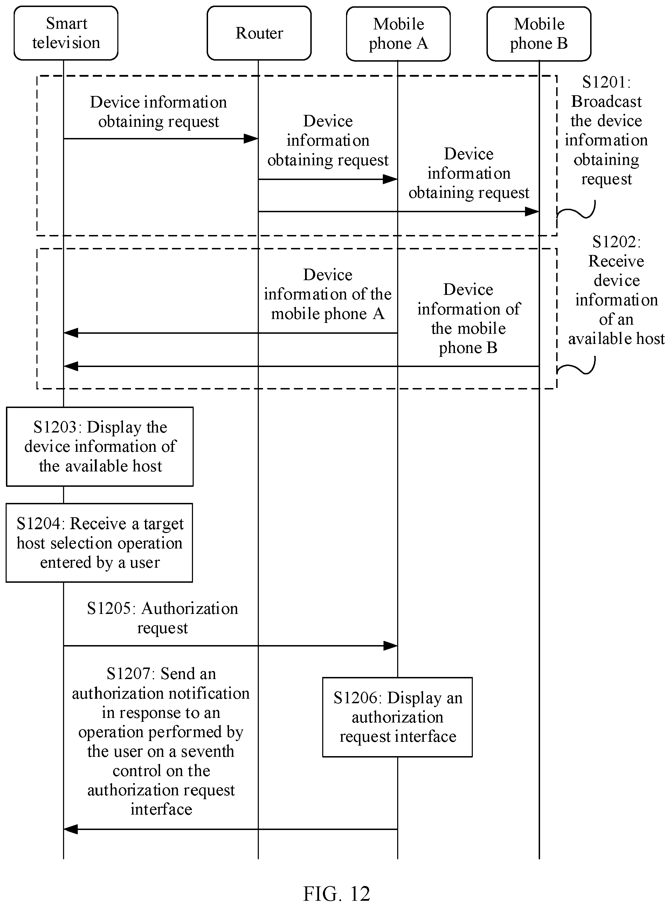

FIG. 12 is a schematic diagram of an application login method according to an embodiment of this application. The method relates to a process of determining a target host in a local area network and obtaining authorization, and specifically includes the following steps S1201 to S1207.

S1201: In response to an operation performed by a user on a second control, a smart television broadcasts a device information obtaining request.

The second control may be, for example, a "One-tap login" icon in a second interface shown in FIG. 3, or may be, for example, a "One-tap login" icon in a first interface shown in FIG. 8. After detecting an operation performed by the user on the "One-tap login" icon, the smart television broadcasts the device information obtaining request. For example, the device information obtaining request may be REQUEST_DEVICE INFORMATION.

In the local area network, electronic devices are connected by using a router. Therefore, in an example, the smart television may send the device information obtaining request to a specific port of the router by using a user datagram protocol (User Datagram Protocol, UDP) broadcast. The electronic devices in the local area network receive the device information obtaining request by listening to the port. The device information obtaining request carries device information of the smart television, for example, a device name, a device model, and an IP address.

S1202: The smart television receives device information of an available host.

In an example, after receiving the device information obtaining request, the electronic device may determine, based on whether a SIM card/an e-SIM card is installed in the electronic device, whether a cellular communication function of the electronic device is available. If the SIM card/e-SIM card is installed in the electronic device, it indicates that the cellular communication function of the electronic device is available, and the electronic device is the available host. If no SIM card/e-SIM card is installed in the electronic device, it indicates that the cellular communication function of the electronic device is unavailable, and the electronic device is not the available host. The available host may send the device information of the available host to the smart television based on the IP address of the smart television. For example, the device information may be included in a RESPONSE_DEVICE_ INFORMATION message.

For example, the electronic device connected to the local area network includes a mobile phone A, a mobile phone B, a notebook computer, a Bluetooth sound box, a robotic vacuum cleaner, and an air purifier. The SIM card is separately installed in the mobile phone A and the mobile phone B, a cellular communication function of the mobile phone A and the mobile phone B is available, and the mobile phone A and the mobile phone B are available hosts. However, no SIM card is installed in the notebook computer, the Bluetooth sound box, the robotic vacuum cleaner, and the air purifier, a cellular communication function of the notebook computer, the Bluetooth sound box, the robotic vacuum cleaner, and the air purifier is unavailable, and the notebook computer, the Bluetooth sound box, the robotic vacuum cleaner, and the air purifier are not available hosts. Therefore, after these electronic devices receive the device information obtaining request, only the mobile phone A and the mobile phone B separately send device information of the mobile phone A and the mobile phone B to the smart television, while the notebook computer, the Bluetooth sound box, the robotic vacuum cleaner, the air purifier, and the like do not send device information to the smart television.

S1203: The smart television displays a third interface, where the third interface includes the device information of the available host.

After receiving the device information of the available host, the smart television displays the device information in a list of the available hosts on the third interface. For example, the smart television receives the device information of the mobile phone A and the mobile phone B. Refer to FIG. 4. The smart television may display device names, namely, the mobile phone A and the mobile phone B on the third interface.

S1204: The smart television receives a target host selection operation entered by the user.

The user may select any available host on the third interface as the target host, to cooperate with the smart television to log in to the application. For example, as shown in FIG. 4, the smart television may select the mobile phone A as the target host according to a user instruction.

S1205: In response to the target host selection operation entered by the user, the smart television sends an authorization request to the target host.

In response to the target host selection operation entered by the user, the smart television may establish a first Socket connection and a second Socket connection to the mobile phone A by using the router. Then, the smart television sends the authorization request to the mobile phone A through the first Socket connection. The authorization request includes the device information of the smart television, for example, an IP address and a device name. For example, the authorization request may be REQUEST LOGIN AUTHORIZATION.

S1206: The target host displays an authorization request interface, where the authorization request interface includes a seventh control.

For example, after receiving the authorization request, the target host may display, for example, the authorization request interface shown in FIG. 5. The user may control, by operating the sixth control (for example, a "Reject" control) on the authorization request interface, the target host to reject the authorization request of the smart television. In addition, the user may alternatively control, by operating the seventh control (for example, an "Allow" control) on the authorization request interface, the target host to cooperate with the smart television to log in to the application.

S1207: The target host sends an authorization notification to the smart television in response to an operation performed by the user on the seventh control on the authorization request interface.

The target host may send the authorization notification to the smart television through the first Socket connection established based on the router. The authorization notification indicates that the target host already accepts the authorization request of the smart television, and authorizes the smart television to log in to the application by using a cellular communication function of the target host in current and subsequent processes of logging in to the target application (for example, AI Fitness). For example, the authorization notification may be RESPONSE_LOGIN_AUTHORIZATION. The authorization notification usually includes device information of the mobile phone A, for example, an IP address and a device name.

After sending the authorization notification to the smart television, the target host may establish an encrypted channel with the smart television, so that the target host and the smart television communicate with each other in an application login process. In addition, a communication channel between the target host and the smart television may not be encrypted. This is not limited in this embodiment.

In addition, in response to an operation performed by the user on the sixth control (for example, the "Reject" icon) on the authorization request interface, the target host may send a rejection notification to the smart television through the first Socket connection established based on the router. The rejection notification indicates that the target host already rejects the authorization request of the smart television, and the smart television cannot log in to the target application by using the target host. For example, the rejection notification may be REFUSE_LOGIN_AUTHORIZATION. After receiving the rejection notification, the smart television may display, for example, the second interface shown in FIG. 10.

According to the foregoing steps S1201 to S1207, the smart television may determine the target host and obtain the authorization from the target host. Then, the smart television may log in to the target application by using the cellular communication function of the target host.

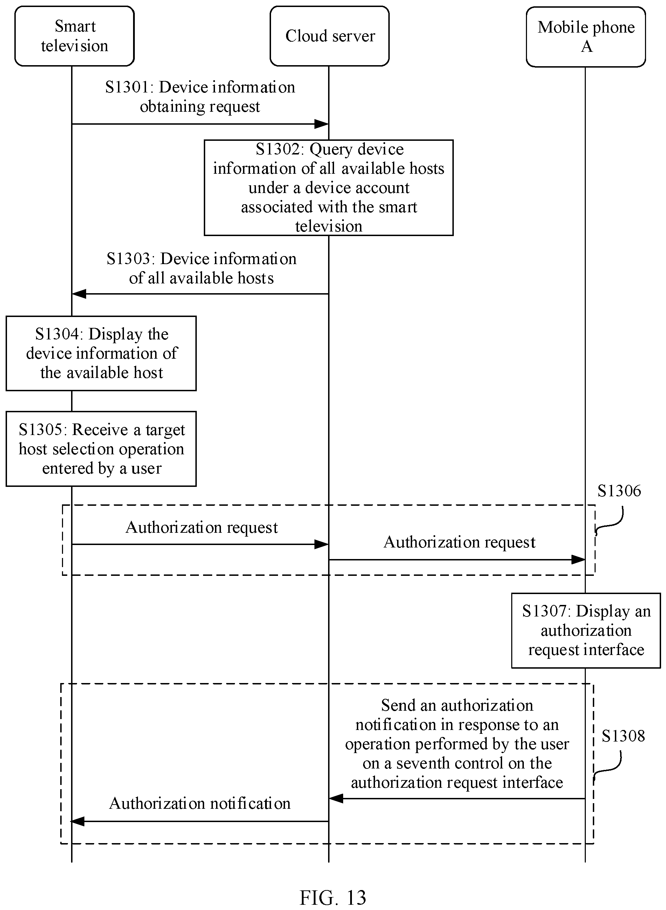

FIG. 13 is a schematic diagram of an application login method according to another embodiment of this application. The method relates to a process of determining a target host under a same device account and obtaining authorization, and specifically includes the following steps S1301 to S1308.

S1301: In response to an operation performed by a user on a second control, a smart television sends a device information obtaining request to a cloud server.

The second control may be, for example, a "One-tap login" icon in a second interface shown in FIG. 3, or may be, for example, a "One-tap login" icon in a first interface shown in FIG. 8. After detecting an operation performed by the user on the "One-tap login" icon, the smart television broadcasts the device information obtaining request. For example, the device information obtaining request may be a REQUEST_HW_DEVICE_INFORMATION. The device information obtaining request includes device information of the smart television, for example, an IP address and a device name.

Usually, various electronic devices of a same manufacturer, for example, a smart television, a mobile phone, a tablet computer, and a notebook computer, are supported in logging in to a same device account, to implement mutual association and information sharing. The electronic devices are connected to each other by using the cloud server provided by a manufacturer. A database of the cloud server stores device information (for example, a device name, an IP address, and a device model) of all electronic devices under the device account. Therefore, in S1301, the smart television may send the device information obtaining request to the cloud server, to obtain device information of all available hosts under the device account from the cloud server.

S1302: The cloud server queries device information of all available hosts under a device account associated with the smart television.

Optionally, after receiving the device information obtaining request, the cloud server may query, by using a message, whether a cellular communication function of each electronic device under the device account is available, determine an electronic device whose cellular communication function is available as the available host, and search a local database for the device information of these available hosts.

S1303: The cloud server sends the device information of all available hosts to the smart television.

For example, the cloud server may send the device information of all the available hosts to the smart television by using a RESPONSE_HW_DEVICE INFORMATION message.

S1304: The smart television displays a third interface, where the third interface includes the device information of the available host.

S1305: The smart television receives a target host selection operation entered by the user.

For S1304 and S1305, refer to S1203 and S1204. Details are not described herein again in this embodiment.

S1306: In response to the target host selection operation entered by the user, the smart television sends an authorization request to the target host.

In S1306, the smart television may send the authorization request to the target host by using the cloud server. In addition, in response to the target host selection operation entered by the user, the smart television may establish a first Socket connection and a second Socket connection to the target host based on a P2P technology. Then, the smart television sends the authorization request to the target host through the first Socket connection. For example, the authorization request may be REQUEST LOGIN AUTHORIZATION.

S1307: The target host displays an authorization request interface, where the authorization request interface includes a seventh control. For S1307, refer to S1206. Details are not described herein again in this embodiment.

S1308: The target host sends an authorization notification to the smart television in response to an operation performed by the user on the seventh control.

In S1308, the target host may send the authorization notification to the smart television by using the cloud server, or may send the authorization notification to the smart television through the first Socket connection established based on the P2P technology. For example, the authorization notification may be RESPONSE LOGIN AUTHORIZATION.

After sending the authorization notification to the smart television, the target host may establish an encrypted channel with the smart television, so that the target host and the smart television communicate with each other in an application login process. In addition, a communication channel between the target host and the smart television may not be encrypted. This is not limited in this embodiment.

In addition, in response to an operation performed by the user on a sixth control (for example, a "Reject" icon) on the authorization request interface, the target host may send a rejection notification to the smart television by using the cloud server or through the first Socket connection established based on the P2P technology. The rejection notification indicates that the target host already rejects the authorization request of the smart television, and the smart television cannot log in to the target application by using the target host. For example, the rejection notification may be REFUSE_LOGIN_AUTHORIZATION. After receiving the rejection notification, the smart television may display, for example, the second interface shown in FIG. 10.

According to the foregoing steps S1301 to S1308, the smart television may determine the target host and obtain the authorization from the target host. Then, the smart television may log in to the target application by using the cellular communication function of the target host.

For example, the target application is AI Fitness. A process in which the smart television determines the target host based on a mobile phone number entered by the user, and obtains the authorization from the target host is specifically as follows.

In response to an operation performed by the user on a first control (for example, a "Log in" icon) on the first interface, the second interface displayed by the smart television may include a second control and a mobile phone number input area. The user may enter a mobile phone number in the mobile phone number input area, and the smart television determines a mobile phone corresponding to the mobile phone number as the target host.

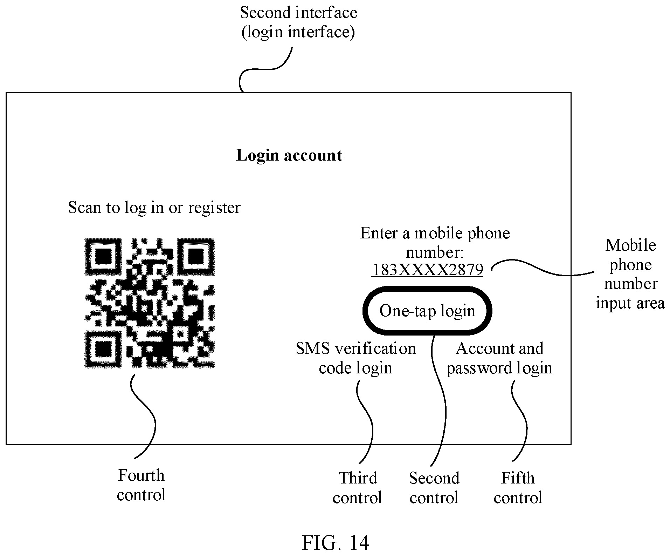

For example, as shown in FIG. 14, the second interface includes the mobile phone number input area, the second control (for example, a "One-tap login" icon), a third control (for example, an "SMS verification code login" icon), a fourth control (for example, a QR code), and a fifth control (for example, an "Account and password login" icon). The smart television may determine a mobile phone corresponding to a mobile phone number "183XXXX2879" entered by the user as the target host.

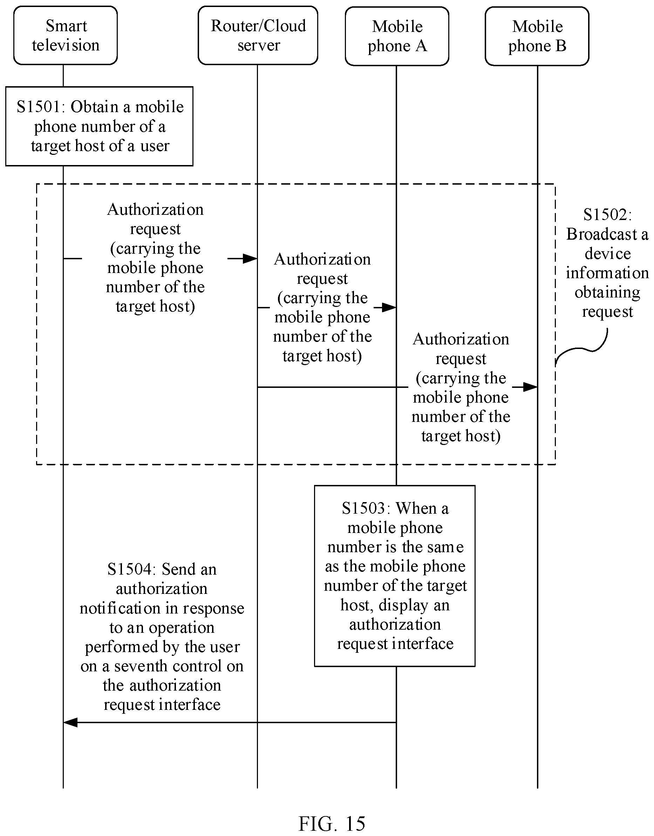

FIG. 15 is a schematic diagram of an application login method according to still another embodiment of this application. The method relates to a process in which a smart television determines a target host based on a mobile phone number entered by a user and obtains authorization from the target host, and specifically includes the following steps S1501 to S1504.

S1501: Obtain the mobile phone number, entered by a user, of the target host. For S1501, refer to the related descriptions in FIG. 14. Details are not described herein again in this embodiment.

S1502: The smart television sends an authorization request to the target host, where the authorization request carries the mobile phone number of the target host.

After detecting that the user enters a valid mobile phone number, the smart television may directly send the authorization request to a mobile phone corresponding to the mobile phone number in response to an operation performed by the user on a second control (for example, a "One-tap login" icon). For example, the authorization request may be REQUEST_LOGIN_AUTHORIZATION.

In a possible implementation, the smart television may broadcast the authorization request to a specific port of a router by using a UDP broadcast, and each electronic device in a local area network receives the authorization request by listening to the port.

In another possible implementation, the smart television may send the authorization request to a cloud server of a device account to which the smart television logs in. The cloud server forwards the authorization request to another electronic device that logs in to the device account.

S1503: When the mobile phone number of the target host is the same as a local phone number, the electronic device displays an authorization request interface, where the authorization request interface includes a sixth control and a seventh control.

After receiving the authorization request, each electronic device determines whether the mobile phone number of the target host is the same as the local phone number. If the mobile phone number of the target host is the same as the local phone number, it indicates that the electronic device is the target host, and the electronic device displays the authorization request interface. For the authorization request interface, refer to FIG. 5. Details are not described herein again in this embodiment. The user may control, by operating the sixth control (for example, a "Reject" control) on the authorization request interface, the target host to reject the authorization request of the smart television. In addition, the user may alternatively authorize, by operating the seventh control (for example, an "Allow" control) on the authorization request interface, the target host to cooperate with the smart television to log in to the application.

S 1504: The target host sends an authorization notification to the smart television in response to an operation performed by the user on the seventh control on the authorization request interface.

When the smart television and the target host are electronic devices in a same local area network, in response to an operation performed by the user on the seventh control on the authorization request interface, the target host may establish a first Socket connection and a second Socket connection to the smart television by using the router. Then, the target host sends the authorization notification to the smart television through the first Socket connection established based on the router. For example, the authorization notification may be RESPONSE LOGIN AUTHORIZATION.

When the smart television and the target host log in to a same device account, the target host may send the authorization notification to the smart television by using the cloud server. In addition, the smart television and the target host may establish the first Socket connection and the second Socket connection by using the P2P technology in response to the operation performed by the user on the seventh control on the authorization request interface. Then, the target host sends the authorization notification to the smart television through the first Socket connection established based on the P2P technology.

After sending the authorization notification to the smart television, the target host may establish an encrypted channel with the smart television, so that the target host and the smart television communicate with each other in an application login process. In addition, a communication channel between the target host and the smart television may not be encrypted. This is not limited in this embodiment.

In addition, in response to an operation performed by the user on the sixth control (for example, the "Reject" icon) on the authorization request interface, the target host may send a rejection notification to the smart television. The rejection notification indicates that the target host already rejects the authorization request of the smart television, and the smart television cannot log in to the target application by using the target host. For example, the rejection notification may be REFUSE_LOGIN_AUTHORIZATION. After receiving the rejection notification, the smart television may display, for example, the second interface shown in FIG. 10.

When the smart television and the target host are electronic devices in a same local area network, the target host sends the rejection notification to the smart television through the first Socket connection established based on the router. When the smart television and the target host log in to a same device account, the target host may send the rejection notification to the smart television by using the cloud server or through the first Socket connection established based on the P2P technology.

It should be noted that in this embodiment, the authorization notification may further include device information of the mobile phone A, for example, an IP address, a device name, and a device model. It may be understood that the target host may alternatively send the device information, as an independent message, of the mobile phone A to the smart television. Details are not described in this embodiment.

According to the foregoing steps S1501 to S 1504, the smart television may determine the target host and obtain the authorization from the target host. Then, the smart television may log in to the target application by using the cellular communication function of the target host.

In conclusion, after obtaining the authorization from the target host, the smart television may cooperate with the target host to log in to the target application by using the mobile phone number of the target host and the cellular communication function of the target host. It should be noted that the target host only needs to authorize the smart television once, and when the smart television subsequently logs in to the application by using the mobile phone number again, the target host does not need to perform authorization again.

### (2) Logging, by the smart television, in to an application by using the target host

For the first time that the smart television logs in to a target application by using a cellular communication function of the target host, after the smart television obtains authorization from the target host, the target host and the smart television may directly log in to the target application, or may log in to the target application according to a user instruction. The following separately describes the two manners of logging in to the target application by using an example in which the target host is a mobile phone A.

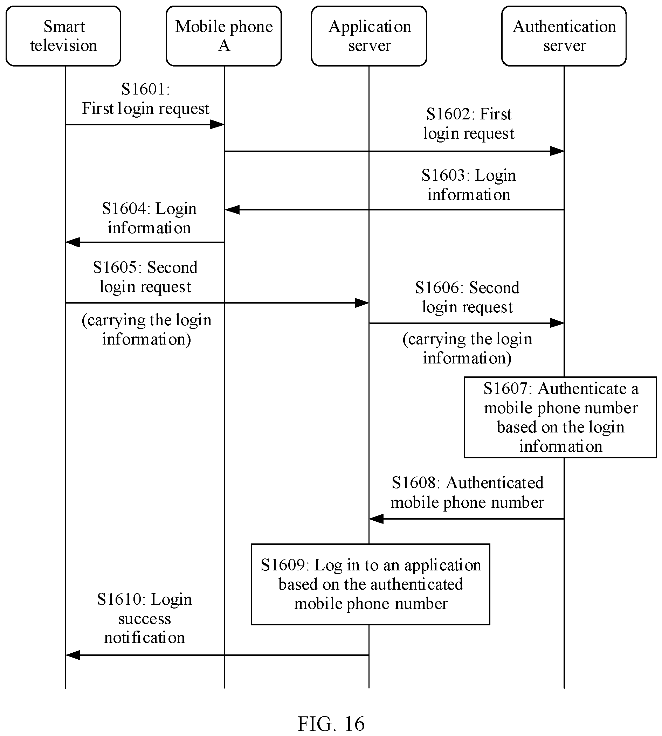

FIG. 16 is a schematic diagram of an application login method according to an embodiment of this application. The method relates to a process in which the target host directly cooperates with the smart television to log in to an application after sending an authorization notification to the smart television in a process in which the smart television logs in to the application by using the target host for the first time. The method specifically includes the following steps S1601 to S1610.

S1601: The smart television sends a first login request to the mobile phone A.

The first login request requests to obtain login information (token) required for logging in to the target application (for example, AI Fitness), and the login information includes a mobile phone number mask, an encryption algorithm, a key, and the like of the mobile phone A. For example, the first login request may be MSG_LOGIN.

In some embodiments, if the mobile phone A and the smart television are electronic devices in a same local area network, the smart television may send the first login request to the mobile phone A through a first Socket connection established based on a router.

In some other embodiments, if the mobile phone A and the smart television log in to a same device account, the smart television may send the first login request to the mobile phone A by using a cloud server. In addition, the smart television and the mobile phone A may alternatively send the first login request to the mobile phone A through the first Socket connection established based on the P2P technology.

S1602: The mobile phone A sends the first login request to an authentication server.

After the mobile phone A receives the first login request, the mobile phone A initializes an authentication software development kit (software development kit, SDK) installed in the mobile phone A. After the authentication SDK is initialized successfully, the mobile phone A sends the first login request to the authentication server.

It should be noted that the authentication server is a management device of an operator, and only an electronic device whose cellular communication function is available can access the authentication server. A cellular communication function of the smart television is unavailable. Therefore, in this embodiment, in a process of logging in to the application, the smart television needs to obtain login information from the authentication server through the mobile phone A. In an example, the mobile phone A may send the first login request to the authentication server by invoking a login information obtaining interface (login token validate) provided by the operator.

S1603: The authentication server sends the login information to the mobile phone A.

After receiving the first login request from the mobile phone A, the authentication server generates corresponding login information based on a mobile phone number of the mobile phone A, and sends the login information to a Modem of the mobile phone A.

S1604: The mobile phone A sends the login information to the smart television.

In some embodiments, if the mobile phone A and the smart television are electronic devices in a same local area network, the mobile phone A may send the login information to the smart television through a second Socket connection established based on the router. After receiving the login information, an IP protocol stack of the smart television sends the login information to an application layer for further processing.

In some other embodiments, if the mobile phone A and the smart television log in to a same device account, the mobile phone A may send the login information to the smart television by using the cloud server. In addition, the mobile phone A may alternatively send the login information to the smart television through the second Socket connection established based on the P2P technology.

S1605: The smart television sends a second login request to an application server, where the second login request carries the login information.

For example, the target application of the smart television is AI Fitness. The smart television sends the second login request to the application server corresponding to AI Fitness. In this embodiment, the second login request carries the login information (namely, a mobile phone number mask, an encryption algorithm, and a key of the mobile phone A), and requests the application server to log in to an application based on the login information.

S1606: The application server sends the second login request to the authentication server.

In this embodiment, the application server needs to log in to the application based on the mobile phone number of the mobile phone A. However, the login information does not include the mobile phone number of the mobile phone A, and the application server cannot determine whether the login information is valid. Therefore, the application server needs to send, to the authentication server, the login information sent by the mobile phone A, so that the authentication server verifies whether the login information is valid, and determines a mobile phone number corresponding to the login information.

S 1607: The authentication server authenticates the mobile phone number based on the login information carried in the second login request.

The authentication server decrypts the mobile phone number mask in the login information into a complete mobile phone number according to a decryption rule corresponding to an encryption rule. If the decrypted mobile phone number is valid, it indicates that authentication of the login information succeeds, and the authentication server sends the decrypted mobile phone number to the application server. If the decrypted mobile phone number is invalid, it indicates that the login information may be abnormal and the authentication fails. In this case, the authentication server may send an authentication failure notification to the application server.

S 1608: The authentication server sends an authenticated mobile phone number of the target host to the application server.

S1609: The application server logs in to the application based on the authenticated mobile phone number.

S1610: The application server sends a login success notification to the smart television. For example, the target application is AI Fitness. After successfully logging in to the application, the smart television may display, for example, a first interface shown in FIG. 6.

In addition, after application login fails, the application server sends a login failure notification to the smart television. After receiving the login failure notification, the smart television may display, for example, a login interface shown in FIG. 10.

According to the application login method provided in this embodiment of this application, when a user logs in to the application by using the target host for the first time, after obtaining authorization from the target host by using a simple operation, the smart television may directly log in to the application. This is easy to operate, and provides good user experience.

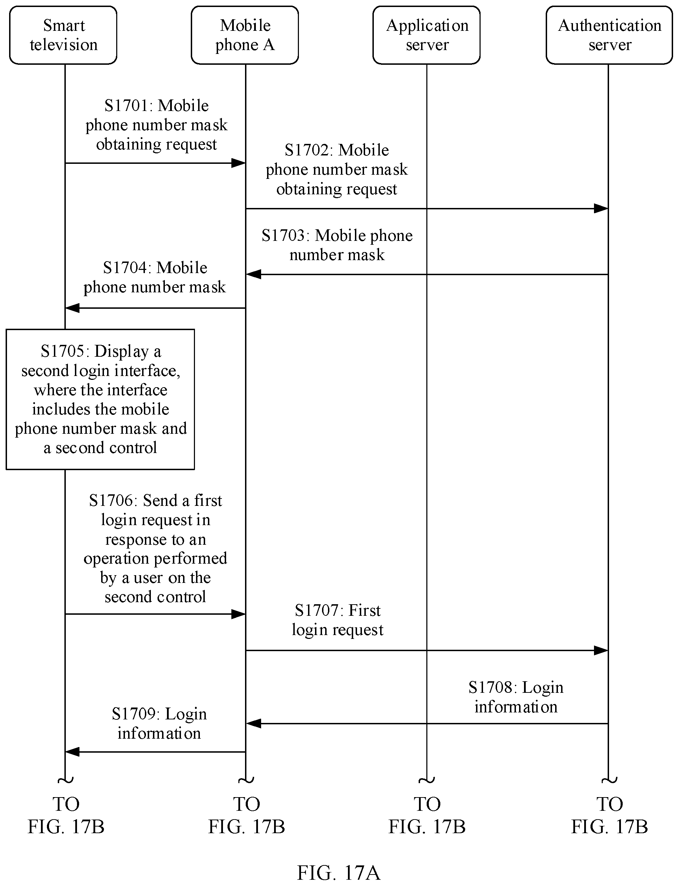

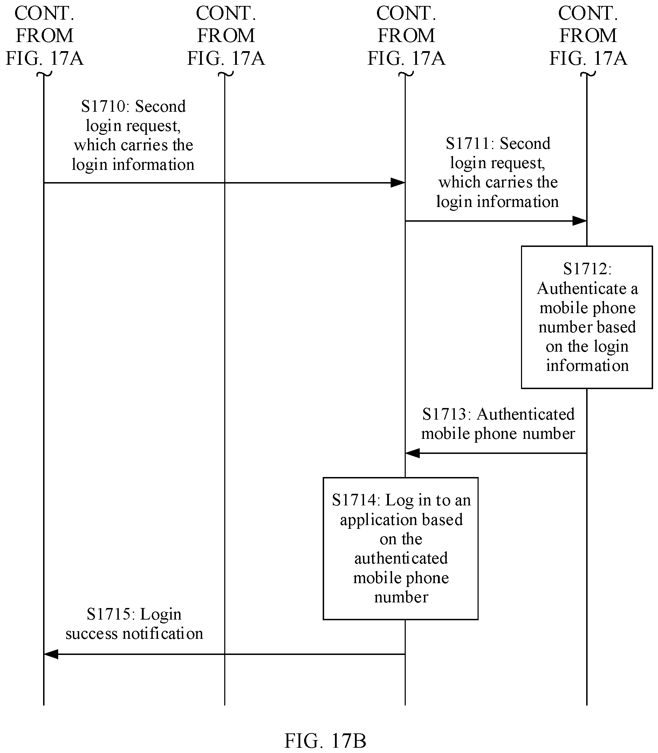

FIG. 17A and FIG. 17B are a schematic diagram of an application login method according to another embodiment of this application. The method relates to a process in which a target host logs in to an application according to a user instruction in a process in which a smart television logs in to the application by using the target host for the first time. The method specifically includes the following steps S1701 to S1715.

S1701: The smart television sends a mobile phone number mask obtaining request to the mobile phone A.

In a process in which the smart television logs in to the target application by using the mobile phone A for the first time, after obtaining authorization from the target host, the smart television directly sends the mobile phone number mask obtaining request to the mobile phone A.

In some embodiments, if the mobile phone A and the smart television are electronic devices in a same local area network, the smart television may send the mobile phone number mask obtaining request to the mobile phone A through a first Socket connection established based on a router.

In some other embodiments, if the mobile phone A and the smart television log in to a same device account, the smart television may send the mobile phone number mask obtaining request to the mobile phone A by using the cloud server. In addition, the smart television may alternatively send the mobile phone number mask obtaining request to the mobile phone A through the first Socket connection established based on the P2P technology.

S1702: The mobile phone A sends the mobile phone number mask obtaining request to an authentication server.

Specifically, after receiving the mobile phone number mask obtaining request, the mobile phone A sends the mobile phone number mask obtaining request to the authentication server by using a Modem through a cellular network.

S1703: The authentication server sends, to the mobile phone A, a mobile phone number mask corresponding to the mobile phone A.

The authentication server converts a mobile phone number of the mobile phone A into the mobile phone number mask according to a preset encryption algorithm, and sends the mobile phone number mask to the mobile phone A through the cellular network, and the mobile phone A receives the mobile phone number mask by using the Modem.

S1704: The mobile phone A sends the mobile phone number mask to the smart television.

In some embodiments, if the mobile phone A and the smart television are electronic devices in a same local area network, the mobile phone A may send the mobile phone number mask to the smart television through a second Socket connection established based on the router.

In some other embodiments, if the mobile phone A and the smart television log in to a same device account, the mobile phone A may send the mobile phone number mask to the smart television by using the cloud server. In addition, the mobile phone A alternatively sends the mobile phone number mask to the smart television through the second Socket connection established based on the P2P technology.

S1705: The smart television displays a second login interface, where the second login interface includes the mobile phone number mask and a login control.

In an example, after receiving the mobile phone number mask, the smart television may display, for example, the second login interface shown in FIG. 14. Refer to FIG. 6. A mobile phone number mask on the second login interface is "183****2879", and the login control includes a second control (for example, a "One-tap login" icon), a third control (for example, an "SMS verification code login" icon), a fourth control (for example, a login QR code), and a fifth control (for example, an "Account and password login" icon).

S1706: The smart television sends a first login request to the mobile phone A in response to an operation performed by the user on the second control on the second login interface.

S1707: The mobile phone A sends the first login request to the authentication server.

S1708: The authentication server sends login information to the mobile phone A.

S1709: The mobile phone A sends the login information to the smart television.

S1710: The smart television sends a second login request to an application server, where the second login request carries the login information.

S1711: The application server sends the second login request to the authentication server.

S1712: The authentication server authenticates the mobile phone number based on the login information carried in the second login request.

S1713: The authentication server sends the authenticated mobile phone number to the application server.

S1714: The application server logs in to the application server based on the mobile phone number.

S1715: The application server sends a login success notification to the smart television.

Specifically, for S1706 to S1715, refer to the foregoing steps S1601 to S1610. Details are not described herein again in this embodiment. The application login method provided in this embodiment is not limited by a same local area network, and can remotely control login to an application.

It should be noted that, after the authorization from the target host is obtained, an upper-layer application of the target host does not perceive a process in which the smart television logs in to the application at one touch by using the cellular communication function of the target host, and no related information is displayed on an interface of the target host.

According to the application login method provided in this embodiment of this application, when the user logs in to the application by using the target host for the first time, after obtaining the authorization from the target host, the user may log in to the application by using a one-tap operation (for example, touching the "One-tap login" icon). This is easy to operate and provides good user experience.

In a process in which the smart television logs in to the application by using the target host (for example, the mobile phone A) not for the first time, after the user operates the second control on the second interface shown in FIG. 6 or the first interface shown in FIG. 9, the smart television may directly log in to the application. Specifically, the smart television logs in to the application by performing S1706 to S1715.

It can be learned that, according to the application login method provided in this embodiment of this application, when the user logs in to the application by using the target host not for the first time, the user may log in to the application by using the one-tap operation (for example, touching the "One-tap login" icon). This is easy to operate and provides good user experience.

In conclusion, compared with login by scanning a QR code, the application login method provided in this embodiment does not need to install and log in to a mobile phone-version application on the target host. In addition, compared with existing login manners such as the SMS verification code login and the account and password login, the user does not need to perform a complex character input operation. Therefore, according to the application login method provided in this embodiment, the application can be quickly logged in to, and user experience is good.

In addition to a first-type electronic device, the application login method provided in this embodiment of this application is applicable to a second-type electronic device on which no target SIM card/e-SIM card is installed. The target SIM card/e-SIM card is a SIM card/an e-SIM card corresponding to a mobile phone number when the mobile phone number is used as an application account to log in to an application.

For example, a mobile phone A corresponds to a mobile phone number A, and a mobile phone B corresponds to a mobile phone number B. When the mobile phone B logs in to the application by using the mobile phone number A as the application account, the mobile phone B is the second-type electronic device on which no target SIM card (namely, a SIM card corresponding to the mobile phone number A) is installed. In this case, the mobile phone B may log in to the application by using the application login method provided in this embodiment, by using a cellular communication function of the target SIM card on the mobile phone A, and by using the mobile phone number A as the application account.

It should be understood that sequence numbers of the steps do not mean an execution sequence in embodiments. The execution sequence of the processes needs to be determined based on functions and internal logic of the processes, and should not constitute any limitation on the implementation processes of embodiments of this application.

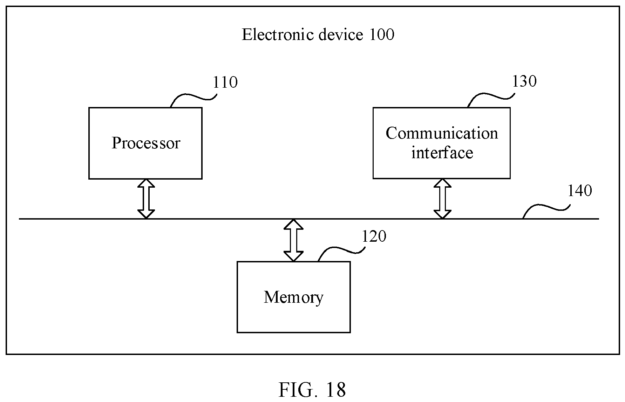

FIG. 18 is a schematic diagram of a structure of an electronic device 100 according to an embodiment of this application. The electronic device 100 includes a processor 110, a memory 120, a communication interface 130, and a bus 140.

The processor 110 may be connected to the memory 120. The memory 120 may be configured to store program code and data. Therefore, the memory 120 may be a storage unit in the processor 110, an external storage unit independent of the processor 110, or a component including the storage unit in the processor 110 and the external storage unit independent of the processor 110.

Optionally, the electronic device 100 may further include the bus 140. The memory 120 and the communication interface 130 may be connected to the processor 110 through the bus 140. The bus 140 may be a peripheral component interconnect (peripheral component interconnect, PCI) bus, an extended industry standard architecture (extended industry standard architecture, EISA) bus, or the like. The bus 140 may be classified into an address bus, a data bus, a control bus, and the like. For ease of representation, only one line is used to represent the bus in FIG. 18, but this does not mean that there is only one bus or one type of bus.

It should be understood that in this embodiment of this application, the processor 110 may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like. Alternatively, the processor 110 uses one or more integrated circuits to execute a related program, to implement the technical solutions provided in embodiments of this application.

The memory 120 may include a read-only memory (read-only memory, ROM) and a random access memory (random access memory, RAM), and provide instructions and data for the processor 110. A part of the processor 110 may further include a non-volatile random access memory. For example, the processor 110 may further store information about a device type.

When the electronic device 100 runs, the processor 110 executes a computer program in the memory 120, to implement the application login method provided in any one of the foregoing embodiments of this application.

It should be understood that, in the descriptions of this application, unless otherwise specified, "/" means "or". For example, A/B may represent A or B. In addition, to clearly describe the technical solutions in embodiments of this application, the terms "first", "second", "third", and the like in embodiments of this application are intended to distinguish between different objects, or are intended to distinguish between different processing of a same object, but are not intended to describe a particular order of the objects.

Reference to "an embodiment", "some embodiments", or the like described in the specification of this application indicates that one or more embodiments of this application include a specific feature, structure, or characteristic described with reference to embodiments. Therefore, statements such as "in one embodiment", "in some embodiments", "in some other embodiments", and "in still some other embodiments" that appear at different places in this specification do not necessarily refer to a same embodiment, but mean "one or more but not all embodiments", unless otherwise specially emphasized in another manner. The terms "include", "contain", "have", and their variants all mean "include but are not limited to", unless otherwise specifically emphasized in another manner.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application login system, comprising a first electronic device and a second electronic device, wherein a cellular communication function of the second electronic device is available; and
the first electronic device is configured to:
display a login interface after an application to be logged in to is started, wherein the login interface comprises a second control, the second control is used to provide a first login manner, and the first login manner is obtaining login information from an authentication server by using the cellular communication function of the second electronic device, to log in to the application based on the login information; and
log in to the application in the first login manner after an operation performed by a user on the second control is detected.

2. The system according to claim 1, wherein a cellular communication function of the first electronic device is unavailable.

3. The system according to claim 1 or 2, wherein when the first electronic device already obtains authorization from the second electronic device, identification information of the second electronic device is further displayed on the login interface.

4. The system according to claim 1 or 2, wherein when the first electronic device does not obtain authorization from the second electronic device,
the first electronic device is further configured to: obtain the authorization from the second electronic device after the operation performed by the user on the second control is detected, and log in to the application in the first login manner.

5. The system according to claim 4, wherein in a process of obtaining the authorization from the second electronic device,
the first electronic device is further configured to:
display a device selection interface, wherein the device selection interface comprises at least one available host, and the available host is an electronic device that can cooperate with the first electronic device to log in to the application in the first login manner; and
send an authorization request to the second electronic device in response to an operation of selecting the second electronic device from the at least one available host by the user, wherein the authorization request requests the second electronic device to cooperate with the first electronic device to log in to the application in the first login manner; and
the second electronic device is configured to:
display an authorization request interface after the authorization request is received, wherein the authorization request interface comprises a sixth control and a seventh control, the sixth control is used to reject the authorization request, and the seventh control is used to accept the authorization request; and
send an authorization notification to the first electronic device in response to an operation performed by the user on the seventh control, wherein the authorization notification indicates that the second electronic device already accepts the authorization request.

6. The system according to claim 5, wherein the first electronic device is further configured to:
update the login interface after the authorization notification is received, wherein an updated login interface displays identification information of the second electronic device; and
log in to the application in the first login manner in response to an operation performed by the user on the second control on the updated login interface.

7. The system according to claim 5 or 6, wherein
the first electronic device is further configured to:
broadcast a device information obtaining request to a router in a local area network in which the first electronic device is located;
receive device information sent by the at least one available host in the local area network; and
display the device selection interface based on the device information sent by the at least one available host.

8. The system according to claim 5 or 6, wherein
the first electronic device is further configured to:
send a device information obtaining request to a cloud server corresponding to a device account logged in to by the first electronic device;
receive device information that is of the at least one available host and that is sent by the cloud server; and
display the device selection interface based on the device information sent by the at least one available host.

9. The system according to any one of claims 1 to 8, wherein the first electronic device is further configured to:
display an application home interface, wherein the application home interface comprises a first control, and the first control is used to control the first electronic device to display the login interface; and
display the login interface in response to an operation performed by the user on the first control.

10. The system according to any one of claims 1 to 9, wherein the login interface further comprises at least one of an SMS verification code login control, a QR code login control, and an account and password login control.

11. The system according to any one of claims 1 to 10, wherein
the first electronic device is further configured to:
send a first login request to the second electronic device, wherein the first login request requests to obtain the login information;
the second electronic device is further configured to:
send the first login request to the authentication server;
receive the login information sent by the authentication server; and
send the login information to the first electronic device; and
the first electronic device is further configured to:
log in to the application based on the login information.

12. The system according to claim 11, wherein the first electronic device is further configured to:
send a second login request to an application server corresponding to the application, wherein the second login request comprises the login information, and the second login request is used by the application server to log in to the application based on the login information; and
receive a login result notification sent by the application server.

13. The system according to any one of claims 1 to 12, wherein
when the first electronic device and the second electronic device are electronic devices in a same local area network, the first electronic device and the second electronic device communicate with each other by using a router in the local area network.

14. The system according to any one of claims 1 to 12, wherein
when the first electronic device and the second electronic device log in to a same device account, the first electronic device and the second electronic device communicate with each other by using a cloud server corresponding to the device account, or by using a peer-to-peer connection.

15. An application login method, wherein the method comprises:
displaying, by a first electronic device, a login interface after an application to be logged in to is started, wherein the login interface comprises a second control, the second control is used to provide a first login manner, and the first login manner is obtaining login information from an authentication server by using a cellular communication function of the second electronic device, to log in to the application based on the login information; and
logging, by the first electronic device, in to the application in the first login manner after an operation performed by a user on the second control is detected.

16. The method according to claim 15, wherein a cellular communication function of the first electronic device is unavailable.

17. The method according to claim 15 or 16, wherein when the first electronic device already obtains authorization from the second electronic device, identification information of the second electronic device is further displayed on the login interface.

18. The method according to claim 15 or 16, wherein the logging, by the first electronic device, in to the application in the first login manner after an operation performed by a user on the second control is detected comprises:
obtaining, by the first electronic device, authorization from the second electronic device after the operation performed by the user on the second control is detected, and logging in to the application in the first login manner.

19. The method according to claim 18, wherein the obtaining, by the first electronic device, authorization from the second electronic device comprises:
displaying, by the first electronic device, a device selection interface, wherein the device selection interface comprises at least one available host, and the available host is an electronic device that can cooperate with the first electronic device to log in to the application in the first login manner;
sending, by the first electronic device, an authorization request to the second electronic device in response to an operation of selecting the second electronic device from the at least one available host by the user, wherein the authorization request requests the second electronic device to cooperate with the first electronic device to log in to the application in the first login manner;
displaying, by the second electronic device, an authorization request interface after the authorization request is received, wherein the authorization request interface comprises a sixth control and a seventh control, the sixth control is used to reject the authorization request, and the seventh control is used to accept the authorization request; and
sending, by the second electronic device, an authorization notification to the first electronic device in response to an operation performed by the user on the seventh control, wherein the authorization notification indicates that the second electronic device already accepts the authorization request.

20. The method according to claim 19, wherein the method further comprises:
updating, by the first electronic device, the login interface after the authorization notification is received, wherein an updated login interface displays identification information of the second electronic device; and
logging, by the first electronic device, in to the application in the first login manner in response to an operation performed by the user on the second control on the updated login interface.

21. The method according to claim 19 or 20, wherein the displaying, by the first electronic device, a device selection interface comprises:
broadcasting, by the first electronic device, a device information obtaining request to a router in a local area network in which the first electronic device is located;
receiving, by the first electronic device, device information sent by the at least one available host in the local area network; and
displaying, by the first electronic device, the device selection interface based on the device information sent by the at least one available host.

22. The method according to claim 19 or 20, wherein the displaying, by the first electronic device, a device selection interface comprises:
sending, by the first electronic device, a device information obtaining request to a cloud server corresponding to a device account logged in to by the first electronic device;
receiving, by the first electronic device, device information that is of the at least one available host and that is sent by the cloud server; and
displaying, by the first electronic device, the device selection interface based on the device information sent by the at least one available host.

23. The method according to any one of claims 15 to 22, wherein the displaying, by a first electronic device, a login interface comprises:
displaying, by the first electronic device, an application home interface, wherein the application home interface comprises a first control, and the first control is used to control the first electronic device to display the login interface; and
displaying, by the first electronic device, the login interface in response to an operation performed by the user on the first control.

24. The method according to any one of claims 15 to 23, wherein the login interface further comprises at least one of an SMS verification code login control, a QR code login control, and an account and password login control.

25. The method according to any one of claims 15 to 24, wherein the logging in to the application in the first login manner comprises:
sending, by the first electronic device, a first login request to the second electronic device, wherein the first login request requests to obtain the login information;
sending, by the second electronic device, the first login request to the authentication server;
receiving, by the second electronic device, the login information sent by the authentication server;
sending, by the second electronic device, the login information to the first electronic device; and
logging, by the first electronic device, in to the application based on the login information.

26. The method according to claim 25, wherein the logging, by the first electronic device, in to the application based on the login information comprises:
sending, by the first electronic device, a second login request to an application server corresponding to the application, wherein the second login request comprises the login information, and the second login request is used by the application server to log in to the application based on the login information; and
receiving, by the first electronic device, a login result notification sent by the application server.

27. The method according to any one of claims 15 to 26, wherein
when the first electronic device and the second electronic device are electronic devices in a same local area network, the first electronic device and the second electronic device communicate with each other by using a router in the local area network.

28. The method according to any one of claims 15 to 26, wherein
when the first electronic device and the second electronic device log in to a same device account, the first electronic device and the second electronic device communicate with each other by using a cloud server corresponding to the device account, or by using a peer-to-peer connection.
